# EUROPÄISCHE PATENTSCHRIFT

(11) **EP 1 859 987 B1**
(45) Veröffentlichungstag und Bekanntmachung des Hinweises auf die Patenterteilung: **17.04.2013**
(21) Anmeldenummer: 06026166.6
(22) Anmeldetag: 18.12.2006
(51) Int. Cl.: B60N 2/32, B60N 2/015, B60N 2/30

(54) **Wickelbank**
Changing table
Table à langer

(30) Priorität: 23.05.2006 DE 102006024519
(43) Veröffentlichungstag der Anmeldung: 28.11.2007
(73) Patentinhaber: Volkswagen Aktiengesellschaft, 38440 Wolfsburg (DE)
(72) Erfinder: Walter, Helmut, 38162 Cremlingen (DE); Wilsdorf, Simone, 38446 Wolfsburg (DE)

(56) Entgegenhaltungen:
- EP-A1- 0 858 925
- DE-A1- 10 043 348
- FR-A1- 2 847 532
- JP-A- 11 245 697
- JP-A- 2005 053 240
- US-A- 6 158 799

## Beschreibung

Die Erfindung betrifft einen Fahrzeugsitz, insbesondere einen Rücksitz oder eine Rücksitzbank in einer schwenkbaren - wickelbaren - Anordnung (Wickelbank) mit den im Oberbegriff des Anspruchs 1 genannten Merkmalen. Die erfindungsgemäße Wickelbank ist im Crashfall in ihrer Nichtgebrauchslage (Wickellage) mittels einer Sicherungsstange gesichert.

Es ist bekannt, Fahrzeugsitze zur Gewinnung eines zusätzlichen Nutzraumes für den Gütertransport hochzuklappen. Insbesondere kommt hierfür die hintere Sitzreihe eines Kraftfahrzeuges in Betracht. Bei dem Hochklappen des Fahrzeugsitzes wird der Fahrzeugsitz aus der Gebrauchslage in eine Nichtgebrauchslage des Fahrzeugsitzes geklappt. In der Regel erfolgt ein Hochklappen des Fahrzeugsitzes dadurch, dass das Sitzteil des Fahrzeugsitzes an seinem Vorderteil am Fahrzeugboden schwenkbar angelenkt ist, während die Rückenlehne durch einen Seitenbeschlag an beiden Seiten des Sitzteiles klappbar angeordnet ist. Das Hochklappen des Fahrzeugsitzes erfolgt derart, dass zunächst nach Lösung einer entsprechenden Arretierung die Rückenlehne des Fahrzeugsitzes auf das Sitzteil umgeklappt wird. Danach wird die Rückenlehne und der Sitzteil zusammen um den am Vorderteil des Fahrzeugsitzes angeordneten Schwenkpunkt hochgeklappt beziehungsweise umgeschwenkt.

Die JP 11 245697 A offenbart einen Fahrzeugsitz, insbesondere einen Rücksitz oder eine Rücksitzbank, mit einem, ein Sitzteil und eine gegenüber dem Sitzteil klappbar angeordnete Rückenlehne tragendes Grundgestell, dass einerends auf mindestens einem, auf einer karosseriefesten Sitzschiene schwenkbaren Lagerelement und anderenends auf einem sitzschienenfesten Verriegelungselement aufsitzt, wobei das schwenkbare Lagerelement unter vorheriger optionaler Klappung der Rückenlehne auf das Sitzteil eine Schwenkbewegung des Fahrzeugsitzes von einer Gebrauchslage in eine Nichtgebrauchslage erlaubt.

Aus der DE 100 43 348 A1 ist es femer bekannt, eine Lagesicherung des hochgeklappten Fahrzeugsitzes in der Nichtgebrauchslage durch eine manuell anzubringende separate Sicherungsstange, die sich auf der Karosserie abstützt vorzunehmen. Es bleibt dem/den Fahrzeugnutzer(n) überlassen, die Sicherungsstange vor Antritt der Fahrt ordnungsgemäß anzubringen.

Bekannt sind femer Gummibänder, mit denen ein Fahrzeugsitz in der hochgeklappten Lage fixiert wird. Das Gummiband wird dabei allgemein am Vordersitz, zum Beispiel an den Stangen der Kopfstützen, befestigt. Nachteilig hierbei ist, dass die Lagefixierung eines Fahrzeugsitzes mittels eines Gummibandes beim Einwirken größerer Kräfte auf den Fahrzeugsitz, wie es bei einem Crash des Fahrzeuges der Fall ist, keine ausreichende Sicherheit hinsichtlich der Stabilität der Lagesicherung bietet.

Die Offenlegungsschrift DE 100 46 512 A1 beschreibt als weiteren Stand der Technik eine Sicherungsvorrichtung zur Lagefixierung von insbesondere hochgeklappten Teilen eines Fahrzeugsitzes in der Nichtgebrauchslage mit mindestens einer Anbindung an einem Teil des Fahrzeuges. Dazu ist die Sicherungsvorrichtung einerseits mit einem Grundkörper eines Sitzteiles des Fahrzeugsitzes über mindestens ein Drehgelenk ständig verbunden. Beim Hochklappen des Sitzteiles des Fahrzeugsitzes in seine Nichtgebrauchslage ist die Sicherungsvorrichtung selbsttätig in ihre Funktionslage klappbar und in dieser Funktionslage selbsttätig durch ein Arretierungsteil fixierbar. Dabei stützt sich die Sicherungsvorrichtung auf einem Teil des Fahrzeugbodens ab und nach dem Herunterklappen des Sitzteiles in seine Gebrauchslage wird die Sicherungsvorrichtung in einer eingeklappten Position zur Aufbewahrung unterhalb des Sitzteiles des Fahrzeugsitzes angeordnet.

Eine weitere gattungsgemäße Lösung geht aus der Patentanmeldung DE 102 55 0979 A1 hervor. Die Druckschrift beschreibt eine Sicherungsvorrichtung zur Lagefixierung mindestens eines Bauteiles, insbesondere hochgeklappten Teilen eines Kraftfahrzeugsitzes, in einer Nichtgebrauchslage, mit mindestens einer Anbindung der Sicherungsvorrichtung an dem Bauteil, insbesondere an einem Sitzteil des Kraftfahrzeugsitzes. Die Sicherungsvorrichtung weist an einem Grundkörper des Bauteiles mindestens ein drehbewegliches Element auf, an dem mindestens ein Stützelement angeordnet ist und/oder die mindestens eine an einer Karosserie angeordnete Verriegelungsvorrichtung umfasst, wodurch das mindestens eine Stützelement nach einer Bewegung des Bauteiles von einer Gebrauchslage in die Nichtgebrauchslage in eine karosserieseitige stufenartig angeordnete Ausbildung eingreift und das Bauteil abstützbar und/oder über die mindestens eine Verriegelungsvorrichtung verriegelbar ist.

Schließlich offenbart die EP 1 413 473 A1 einen auf Schienen angeordneten Fahrzeugsitz, der gegenüber einer Karosserie in Gebrauchsstellung festgelegt ist und nach umklappen einer Rückenlehne über eine quer zur Fahrtrichtung liegende Achse und nach Entriegeln des Fahrzeugsitzes gemeinsam mit dem Schienensystem in eine Vertiefung der Karosserie in eine Nichtgebrauchstellung klappbar ist, wobei hier in der Nichtgebrauchstellung keine separaten Stützelemente zum Einsatz kommen.

Der Erfindung liegt die Aufgabe zugrunde, einen schwenkbaren Kraftfahrzeugsitz, der mindestens ein Sitzteil und mindestens eine Rückenlehne umfasst, vorzugsweise mit einer Sicherungsvorrichtung der eingangs genannten Art zu schaffen, die erst beim Hochklappen des Kraftfahrzeugsitzes von der Gebrauchslage in eine Nichtgebrauchslage aus einer Nichtfunktionsstellung in eine Funktionsstellung überführbar ist. Die Sicherungsvorrichtung soll eine stabile und sichere Lagefixierung des Kraftfahrzeugsitzes ermöglichen und die in der Gebrauchsstellung weder am Kraftfahrzeugsitz noch am Fahrzeugboden des Kraftfahrzeugsitzes störend wirken.

Die Aufgabe wird in Verbindung mit den Merkmalen des Oberbegriffs des Anspruchs 1 dadurch gelöst, dass ein schwenkbares Lagerelement entlang einer Sitzschiene beweglich angeordnet ist und eine Ausrückbewegung eines Grundgestells eines Fahrzeugsitzes gegenüber der Sitzschiene eine Freigabe eines Verriegelungselementes bewirkt, wodurch eine Schwenkbewegung des Grundgestells über das schwenkbare Lagerelement in die Nichtgebrauchslage des Fahrzeugsitzes ausführbar ist, wobei das schwenkbare Lagerelement mit einem sich auf der mindestens einen Sitzschiene abstützenden Führungselement drehbeweglich verbunden ist, welches den Fahrzeugsitz führt und die Position der Nichtgebrauchslage bestimmt, wobei die Nichtgebrauchslage durch eine am Grundgestell drehbeweglich - optional - angeordnete, in Gebrauchslage am Fahrzeugsitz fixierte und in Nichtgebrauchslage [Wickellage] an einem freien Ende lösbare und an der mindestens einen Sitzschiene befestigbare Sicherungsstange crashsicher festlegbar ist.

In bevorzugter Ausgestaltung der Erfindung ist das relativ zur Sitzschiene schwenkbare Lagerelement über ein in der mindestens einen Sitzschiene angeordnetes Kugellager oder Gleitlager beweglich angeordnet, um eine Ausrückbewegung des Grundgestells gegenüber der Sitzschiene zu ermöglichen.

Die Ausrückbewegung und dessen erster Verstellweg des Grundgestells gegenüber der Sitzschiene wird durch einen in Richtung der Ausrückbewegung am Ende des Kugellagers angeordneten Anschlag oder durch die Länge einer ersten Führungsnut des Gleitlagers, die jeweils in der Sitzschiene angeordnet sind, bestimmt.

In weiterer bevorzugter Ausgestaltung der Erfindung ist das Verriegelungselement, insbesondere ein Rastpilz, der vor der Ausrückbewegung des Grundgestells in einer das Verriegelungselement umgreifenden Aufnahmeöffnung des Grundgestells festsitzt, die sich jedoch in Richtung der Ausrückbewegung öffnet und nach durchgeführter Ausrückbewegung das Verriegelungselement freigibt, so dass das Grundgestell über das scharnierartige ausgebildete Lagerelement um eine Grundgestell-Schwenkachse schwenkbar ist. Die Ausrückbewegung ist durch mindestens ein Ausrück-/Schwenk-Bedienelement, insbesondere eine flexible Lasche, ausführbar ist, das am Grundgestell befestigt ist und nach der Ausrückbewegung eine Schwenkbewegung unter vorheriger optionaler Klappung der Rückenlehne ermöglicht. Ferner ist vorzugsweise ein Rückenlehnenklapp-Bedienelement angeordnet, welches die Klappung als optionale Bedienhandlung vor dem Verschwenken des Grundgestells ermöglicht. Die Verschwenkung des Grundgestells kann selbstverständlich durch eine Verriegelung davon abhängig gemacht werden, ob die Rückenlehne bereits geklappt worden ist oder nicht.

In bevorzugter Ausgestaltung der Erfindung weist das Führungselement des Fahrzeugsitzes jeweils endseitig Hülsen auf, wobei das Führungselement über die Hülsen durchgreifende Befestigungselemente unmittelbar oder mittelbar einerseits mit dem schwenkbaren Lagerelement und andererseits mit einer zweiten Führungsnut in der Sitzschiene drehbeweglich verbindbar ist. Die Länge der zweiten Führungsnut bestimmt einen zweiten maximalen Verstellweg des Grundgestells - von Gebrauchslage in die Nichtgebrauchslage [Wickellage] -, da das Führungselement einendseitig in der Führungsnut drehbeweglich angeordnet ist, so dass die Position der Nichtgebrauchslage [Wickellage] durch die Länge der zweiten Führungsnut bestimmt ist.

Letztlich ist am Fahrzeugsitz zur Lösung der Aufgabe optional eine Sicherungsvorrichtung angeordnet.

Die Sicherungsstange des Fahrzeugsitzes dient zur Lagefixierung des über die Schwenkbewegung um eine Schwenkachse des Grundgestells auf mindestens einer Sitzschiene aufsitzenden Fahrzeugsitzes in seiner Nichtgebrauchslage, welche über mindestens eine Anbindung an dem sich in der Gebrauchslage befindlichen Grundgestell in einer Nichtfunktionsstellung vorgehalten ist, wobei die Sicherungsstange an dem Grundgestell des Fahrzeugsitzes drehbeweglich angeordnet ist und in einer Gebrauchslage des Fahrzeugsitzes an dem Grundgestell an einem freien Ende lösbar fixiert ist und erst in der Nichtgebrauchslage [Wickellage] des Fahrzeugsitzes gelöst und an der Sitzschiene wieder in einer Funktionsstellung fixiert wird, um den geschwenkten Fahrzeugsitz in seiner Nichtgebrauchslage gegen einen Crash zu sichern.

Die Sicherungsstange ist am Grundgestell eines Kraftfahrzeugsitzes unmittelbar oder über ein Halteblech mittelbar vorzugsweise über Schraubverbindungen befestigt ist und weist ein Gelenk auf, welches über eine erste Sicherungsstangen-Schwenkachse eine Drehbewegung in eine Schwenkbewegung und über eine zweite Sicherungsstangen-Schwenkachse eine Drehbewegung im Wesentlichen quer zu der Schwenkbewegung des Grundgestells ermöglicht.

Die Drehbewegung des Gelenkes der Sicherungsstange im Wesentlichen quer zur Schwenkbewegung erlaubt bereits eine Verlagerung der Sicherungsstange aus der Nichtfunktionsstellung nach einem Lösen der Fixierung der Sicherungsstange aus einer am Grundgestell angeordneten ersten Aufnahmevorrichtung.

Eine weitere Drehbewegung des Gelenkes der Sicherungsstange nach der im Wesentlichen quer zur Schwenkbewegung in die Schwenkbewegung des Grundgestells erlaubt nach gelöster Fixierung der Sicherungsstange aus der ersten Aufnahmevorrichtung am Grundgestell eine crashsichere Fixierung der Sicherungsstange in einer sitzschienenseitigen zweiten ersten Aufnahmevorrichtung [Funktionsstellung] .

Zur Fixierung dient ist vorzugsweise in beiden Aufnahmevorrichtungen mindestens ein Aufnahmeelement, ein Rastbolzen, in den eine endseitig angeordnete Rastklaue der Sicherungsstange eingreift.

Weitere bevorzugte Ausgestaltungen der Erfindung ergeben sich aus den übrigen, in den Unteransprüchen genannten Merkmalen.

Diese Lösung hat folgende Vorteile. Zum Ersten sind alle Bauteile, die zur Verschwenkung der Wikelbank und zur Sicherung der Wickelbank gegenüber der Karosserie benötigt werden, auf der mindestens einen Sitzschiene beziehungsweise an dem Grundgestell des Fahrzeugsitzes angeordnet. Dadurch ergibt sich, dass die Wickelbank problemlos nachgerüstet werden kann, indem die mindestens eine Sitzschiene am Ladeboden nachträglich montierbar ist.

Zum Zweiten kann durch die Anordnung der Wickelbank in Nichtgebrauchslage ein vergrößerter Laderaum erzeugt werden, so dass im Laderaum eine vergrößerte Menge an Ladegut aufnehmbar ist, wobei in bevorzugter Ausgestaltung an den nachrüstbaren Sitzschienen femer Verzurrelemente vorgesehen werden können um das Ladegut leicht verzurren zu können.

Zum Dritten besteht der Vorteil, dass für die Sicherungsvorrichtung, also die Sicherungsstange, karosserieseitig keine Aufnahmen, Vertiefungen oder dergleichen angeordnet werden müssen, da die karosserieseitige Aufnahmevorrichtung in die Sitzschiene integriert ist, so dass mit nachträglicher Montage der Sitzschiene gleichzeitig die Sicherungsstange einerseits am Grundgestell des Fahrzeugsitzes in Gebrauchslage vorgehalten und in Nichtgebrauchslage an der Sitzschiene fixiert werden kann.

Die Erfindung wird nachfolgend anhand eines Ausführungsbeispieles und der zugehörigen Zeichnungen näher erläutert. Es zeigen:

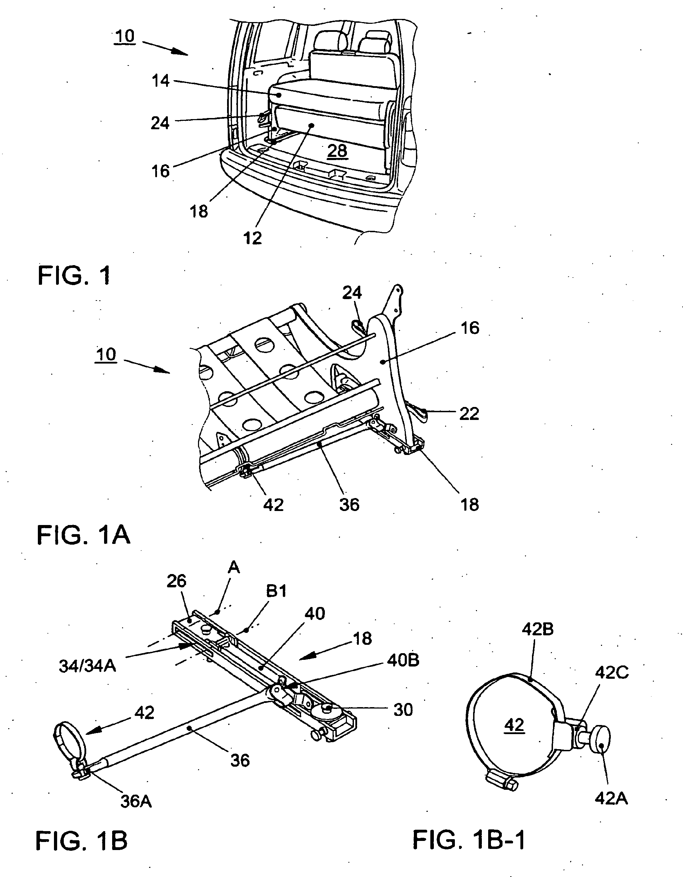

- Figur 1: eine perspektivische Innenansicht einer Rücksitzbank mit bereits geklappter Rückenlehne vor einer Verlagerung in eine Nichtgebrauchslage (Wickellage);
- Figur 1A: eine perspektivische Übersichtsdarstellung der Bauteile des Grundgestells der Rücksitzbank noch in Gebrauchslage;
- Figur 1B: eine vergrößerte Darstellung der wesentlichen mit dem Grundgestell verbundenen Bauteile in Gebrauchslage [Wickellage] der Rücksitzbank nach noch nicht erfolgter Ausrückbewegung der Rücksitzbank;
- Figur 1 B-1: eine vergrößerte perspektivische Darstellung einer ersten Aufnahmevorrichtung;
- Figur 2: eine vergrößerte perspektivische Innenansicht eines Teiles der Rücksitzbank mit bereits geklappter Rückenlehne vor einer Verlagerung in die Nichtgebrauchslage [Wickellage] ;
- Figur 3: eine vergrößerte perspektivische Innenansicht eines Teiles der Rücksitzbank mit bereits geklappter Rückenlehne nach der Ausrückbewegung vor einer Verlagerung in eine Nichtgebrauchslage [Wickellage];
- Figur 4: eine vergrößerte perspektivische Innenansicht eines Teiles der Rücksitzbank mit bereits geklappter Rückenlehne nach der Ausrückbewegung während der Verlagerung in eine Nichtgebrauchslage [Wickellage];
- Figur 5: eine vergrößerte perspektivische Innenansicht eines Teiles der Rücksitzbank mit bereits geklappter Rückenlehne nach der Ausrückbewegung in einer maximalen Verlagerung in die Nichtgebrauchslage [Wickellage];
- Figur 6: eine perspektivische Innenansicht einer Rücksitzbank mit bereits geklappter Rückenlehne in Nichtgebrauchslage [Wickellage];
- Figur 6A: eine perspektivische Übersichtsdarstellung der Bauteile des Grundgestells der Rücksitzbank in Nichtgebrauchslage [Wickellage];
- Figur 6B: eine vergrößerte Darstellung der wesentlichen mit dem Grundgestell verbundenen Bauteile in Nichtgebrauchslage [Wickellage] der Rücksitzbank nach erfolgter Ausrückbewegung und Schwenkbewegung der Rücksitzbank;

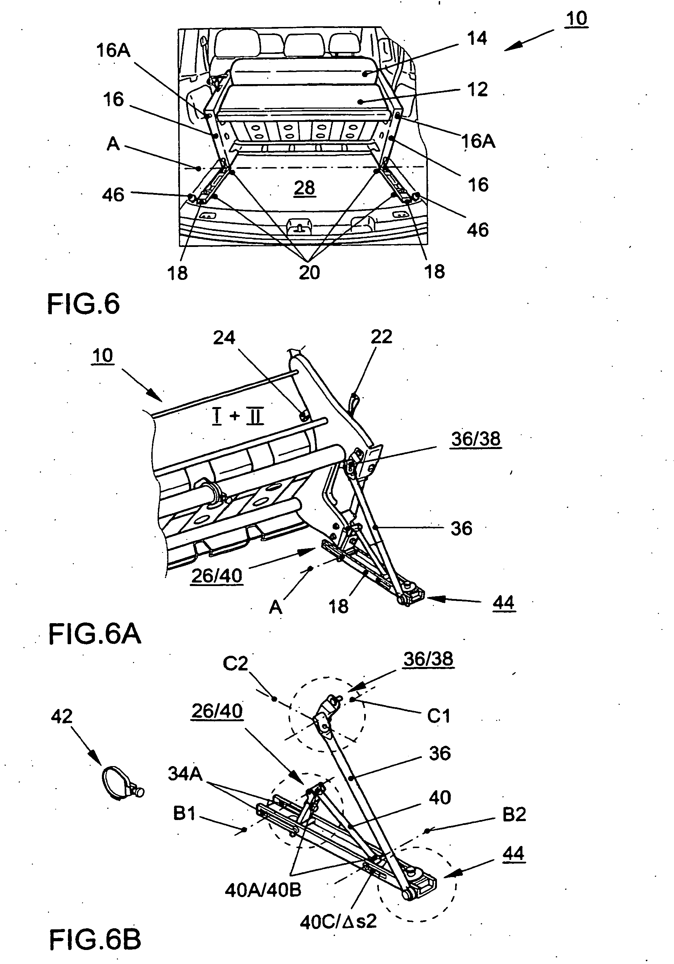

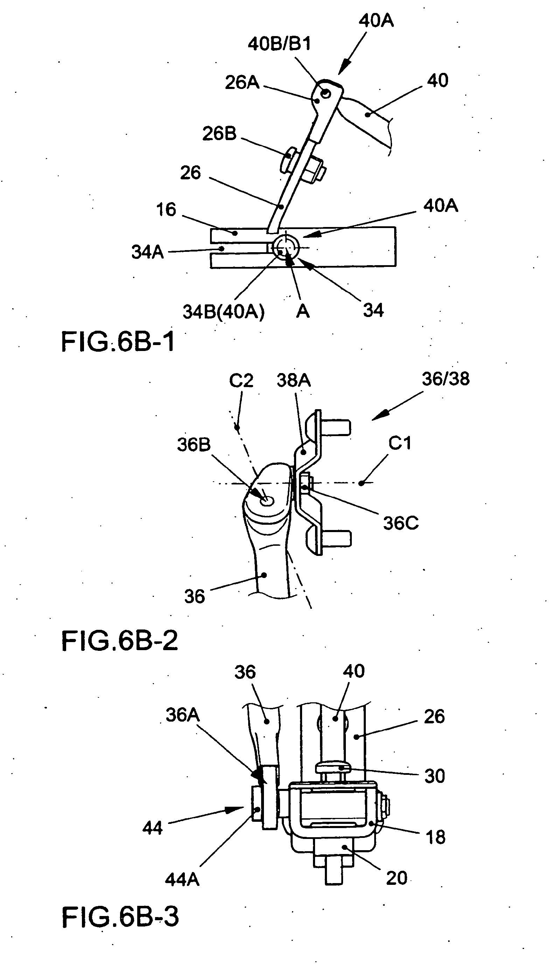

- Figur 6B-1: eine vergrößerte seitliche Darstellung, gemäß Figur 6B, eines Lagerelementes;
- Figur 6B-2: eine vergrößerte Darstellung, gemäß Figur 6B, einer Sicherungsstange in einer Ansicht von hinten und
- Figur 6B-3: eine vergrößerte Darstellung, gemäß Figur 6B, der Ankopplung von eines Führungselementes und der Sicherungsstange an einer Sitzschiene in einer Ansicht von hinten.

Die Figuren 1 bis 6 zeigen zunächst die grundsätzliche Vorgehensweise der Überführung eines Kraftfahrzeugsitzes am Beispiel einer Rücksitzbank aus der Gebrauchslage in die Nichtgebrauchslage. Die Nichtgebrauchslage wird auch als "Wickellage" bezeichnet, da die vorzunehmenden Bewegungsabläufe einer Art Wickelung entsprechen.

Figur 1 zeigt die Innenansicht eines Kraftfahrzeuges und die Rücksitzbank 10, die ein Sitzteil 12 und eine Rückenlehne 14 umfasst. Die Rückenlehne 14 ist aus einer Gebrauchslage bereits auf das Sitzteil 12 geklappt worden. Zur Entriegelung der Rückenlehne 14 dient ein Rückenlehnenklapp-Bedienelement 24, welches in Figur 1 als Lasche ausgeführt und dargestellt ist. Die Rücksitzbank 10 ist an einem Grundgestell 16 angebracht und ist auf Sitzschienen 18 auf einer Karosserie 28 gelagert und befestigt.

Grundsätzlich kann ein Kraftfahrzeugsitz auf nur einer einzigen, beispielsweise mittleren, Sitzschiene 18 angeordnet werden, vorzugsweise werden jedoch für Rücksitzbänke 10 beidseitig Sitzschienen 18 angeordnet.

Die Sitzschienen-Befestigungselemente 20, vorzugsweise Schraubbolzen, sind in Figur 6 sichtbar, da sich die Rücksitzbank 10 hier bereits in Nichtgebrauchslage [Wickellage] befindet.

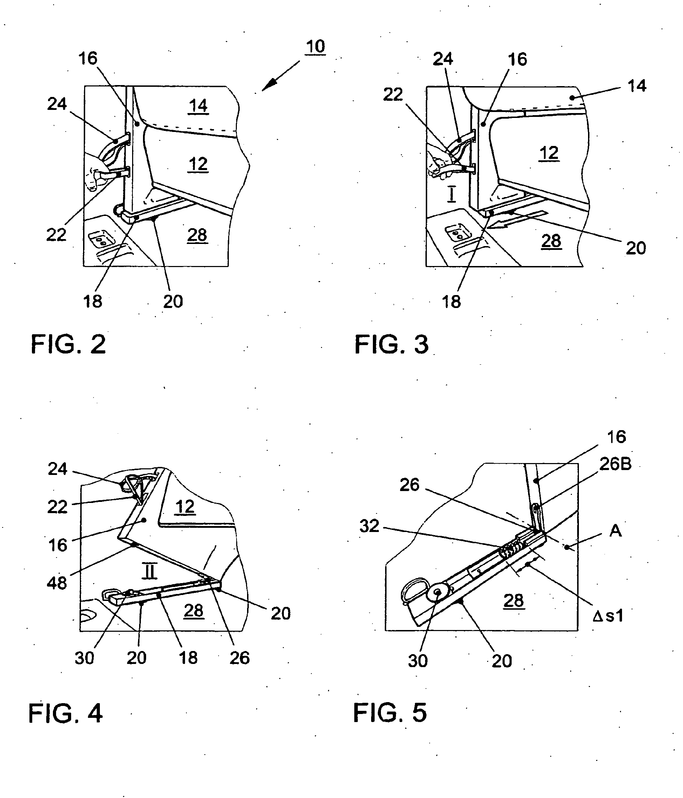

Die Wickellage nach Figur 6 kann durch Bedienhandlungen erreicht werden, die in Figur 2 bis 5 dargestellt sind. Die Figuren 2 bis 5 zeigen jeweils eine in Fahrtrichtung gesehene linke vergrößerte Detailansicht des Sitzteiles 12, der Rückenlehne 14 und des Grundgestells 16 auf der Sitzschiene 18. Figur 2 zeigt, dass neben dem Rückenlehnenklapp-Bedienelement 24 ein weiteres Ausrück-/Schwenk-Bedienelement 22 angeordnet ist, an welchem im Ausführungsbeispiel entgegengesetzt zur Fahrtrichtung gezogen wird, um das Grundgestell 16 gegenüber der Sitzschiene 18 entgegen der Fahrtrichtung zu verlagern.

Figur 3 zeigt die erfolgte Verlagerung anhand des dargestellten Pfeiles mit gleichen Bezugszeichen.

Nach erfolgter Ausrückbewegung I ist eine Schwenkbewegung II, siehe Figur 4 des Grundgestells 16 gegenüber der Sitzschiene 18 ausführbar. Im in Fahrtrichtung gesehenen vorderen Bereich des Grundgestells 16 ist ein gegenüber der Sitzschiene 18 schwenkbares Lagerelement 26 angeordnet. Im hinteren Bereich weist die Sitzschiene 18 ein Verriegelungselement 30 auf, welches in einer Aufnahme 48 des Grundgestells 16 verrastbar ist. Das Verriegelungselement 30 ist vorzugsweise als Rastpilz ausgebildet, der das Grundgestell 16 jedoch erst nach der in Figur 2 und 3 beschriebenen Ausrückbewegung I freigibt, da die dem Rastpilz im Wesentlichen gegenüberliegende Aufnahme 48 so ausgebildet ist, dass sich die Öffnung der Aufnahme 48 in Richtung der Ausrückbewegung I vergrößert, so dass die Rastverbindung aufgehoben wird und die Rücksitzbank 10 geschwenkt werden kann.

Figur 5 zeigt die Sitzschiene 18, wobei das Grundgestell 16 bereits in eine maximal geschwenkte Position um die Grundgestell-Schwenkachse A geschwenkt worden ist. Das schwenkbare Lagerelement 26 ist für die Ausrückbewegung I und auch danach gegenüber der Sitzschiene 18 um einen ersten Verstellweg Δs1 in Ausrückbewegung I [entgegen der Fahrtrichtung] und zurück und nach erfolgter Schwenkbewegung 11 frei vor und zurück verlagerbar.

Die Detailansicht der Figur 5 zeigt, dass beispielsweise zur Lageveränderung des Lagerelementes 26 gegenüber der Sitzschiene 18 ein Kugellager 32 anordbar ist. In vergrößerter Darstellung ist in Figur 5 auch der Rastpilz 30 in einer vergrößerten Darstellung auf der Sitzschiene 18 sichtbar.

Die Figur 5 zeigt ebenfalls, dass das Grundgestell 16 an dem Lagerelement 26 über einGrundgestell-Befestigungselement 26B, siehe auch Figur 6B-1, in Form einer Spezialschraube oder dergleichen crashsicher befestigt ist.

In einer Gesamtinnenansicht zeigt Figur 6 die Rücksitzbank 10 in ihrer Nichtbebrauchslage [Wickellage], wobei die Klappung der Rückenlehne 14 selbstverständlich ein möglichst weites Umklappen der Rücksitzbank 10 ermöglicht. Die Klappung der Rückenlehne 14 ist jedoch optional durchführbar ist. Eine Nichtklappung der Rückenlehne 14 führt jedoch dazu, dass die Schwenkbewegung in Fahrtrichtung durch die nicht geklappte Rückenlehne 14 eingeschränkt ist.

Denkbar ist auch, dass eine Klappung der Rücksitzbank 10 erst ausführbar ist, wenn die Rückenlehne 14 bereits auf das Sitzteil 12 geklappt worden ist. Eine entsprechende Verriegelung ist dabei im Bereich der Bedienelemente 22, 24 ausführbar.

Die Figuren 1 bis 6 zeigen femer jeweils im Bereich der Sitzschienen 18 Verzurrelemente 46, die an den Sitzschienen 18 angeordnet sind, so dass der durch die Wickellage erreichte zusätzliche Laderaum für Ladegut genutzt werden kann, welches dann komfortabel an den Verzurrelementen 46 befestigt werden kann.

In Fortführung der Funktionen und der beschriebenen Bedienhandlungen der Figuren 1 bis 6 sind zur Unterstützung der Ausrückbewegung I und der Schwenkbewegung II weitere Bauteile angeordnet, deren Position in Gebrauchlage der Rücksitzbank 10 in den Figuren 1A und 1 B sowie der Figur 1 B-1 dargestellt sind. Die Figuren 6A und 6B zeigen die gleichen Bauteile in der Nichtgebrauchslage der Rücksitzbank 10, wobei in Ergänzung zur Figur 6B vergrößerte Darstellungen, des Lagerelementes 26, Figur 6B-1, einer Sicherungsstange 36 und der Ankopplung der Sicherungsstange 36, Figur 6B-2 und eines Führungselementes 40, Figur 6B-3, in Nichtgebrauchslage des Kraftfahrzeugsitzes 10 dargestellt sind.

Figuren 1A und 1B zeigen, dass auf der Sitzschiene 18, vorzugsweise beidseitig der Rücksitzbank 10, neben dem Lagerelement 26 und dem Verriegelungselement 30 ein Führungselement 40 angeordnet ist und optional eine Sicherungsstange 36 angeordnet wird.

Im Unterschied zu der Figur 5 ist das Lagerelement 26 in einer Art Gleitlager 34 entlang der Sitzschiene 18 beweglich geführt, wobei das Gleitlager 34 derart ausgebildet ist, dass in den Seitenbereichen der Sitzschiene 18 jeweils eine erste Führungsnut 34A angeordnet ist.

Ein in einer Hülse 40A angeordneter Gleitlagerführungsbolzen 34B (Figur 6B-1) ermöglicht die drehbewegliche Führung des Lagerelementes 26 um eine bei der Schwenkbewegung II - entgegen der Fahrtrichtung - mitgleitende Grundgestell-Schwenkachse A. Auf der anderen Seite des Lagerelementes 26 ist das Führungselement 40 angeordnet, welches beidseitig eine Hülse 40A aufweist, die dort anderenends ebenfalls von einem Befestigungselementen 40B, insbesondere Bolzen oder dergleichen, durchgriffen werden, so dass das Führungselement 40 (Figur 6B-1) drehbeweglich am Lagerelement 26 und an der Sitzschiene 18 angeordnet ist.

Vorzugsweise ist am Lagerelement 26 einen Hülsenanbindung 26A angeordnet, wodurch das Führungselement 40 mittelbar drehbeweglich mit dem Lagerelement 26 verbunden ist.

Das Führungselement 40 ist auf der dem Lagerelement 26 gegenüberliegenden Seite über eine gleichartig ausgebildete Verbindung aus Hülse 40A und Befestigungsbolzen 40B in einer zweiten Führungsnut 40C der entlang der Sitzschiene 18 drehbeweglich angeordnet.

Daraus ergibt sich eine zweite Führungselement-Schwenkachse B2, die sich bei ausgeführter Schwenkbewegung II in Fahrtrichtung in der zweiten Führungsnut 40C gleitet verlagern lässt.

Das so angeordnete Führungselement 40 ermöglicht bei Überführung der Rücksitzbank 10 nach der beschriebenen Ausrückbewegung I eine Schwenkbewegung II, wie bereits in den Figuren 1 bis 6 beschrieben, wobei das Führungselement 40 eine Führung und Begrenzung der Schwenkbewegung II ermöglicht.

Optional ist zur Sicherung der in den Figuren 6, 6A und 6B dargestellten Nichtgebrauchslage eine Sicherungsstange 36 vorgesehen, die in den Figuren 1A, 1 B in einer Nichtfunktionsstellung am Grundgestell 16 der Rücksitzbank 10 vorgehalten wird.

Dazu ist die Sicherungsstange 36 am Grundgestell 16, siehe auch Figur 6B-2, vorzugsweise durch eine Haltevorrichtung 38 über ein Halteblech 38A mittelbar am Grundgestell 16 angeordnet, wobei ein Gelenk 36 dafür sorgt, dass die Sicherungsstange 36 quer und in Schwenkbewegung II um eine erste Sicherungsstangen-Schwenkachse C1 und um eine zweite Sicherungsstangen-Schwenkachse C2 drehbeweglich am Grundgestell 16 angeordnet ist. Zur Befestigung der Sicherungsstange dient ein Gelenkbefestigungselement 36C, welches das Gelenk 36B am Halteblech 38A drehbeweglich anordnet.

In der in Figur 1A, 1 B dargestellten Nichtfunktionsstellung der Sicherungsstange 36 ist am Grundgestell 16, hier an einen zum Grundgestells 16 gehörenden Rohrrahmen, eine erste Aufnahmevorrichtung 42 vorgesehen, die eine Halteschelle 42B umfasst, die den Rohrrahmen umgreift und an der einen Halter 42C befestigt, der einen ersten Rastbolzen 42A trägt. Die entsprechenden Details zur ersten Aufnahmevorrichtung 42 sind in der Figur 1 B-1 dargestellt.

Die beschriebenen Bauteile ermöglichen nun eine Führung und Sicherung der durch das Führungselement 40 begrenzten Verlagerung. Die Sicherungsstange 36 ermöglicht die Sicherung der Rücksitzbank 10 nach der Verlagerung aus der Gebrauchslage in die Nichtgebrauchslage [Wickellage].

Zur Verdeutlichung sind dazu die Figuren 6A und 6B dargestellt, welche die ausgehend von den Figuren 1A und 1 B dargestellten Bauteile mit gleichen Bezugszeichen jedoch in Wickellage der Rücksitzbank 10 zeigen.

Nach der Ausrückbewegung I liegt das scharnierartige Lagerelement 26 in einer in Fahrtrichtung gesehenen hinteren Position, wobei die Ausrückbewegung I durch die Länge der zweiten Führungsnut 40C durch einen zweiten Verstellweg Δs2 festlegbar ist, so dass Hüls 40A und Befestigungsbolzen 40B in der zweiten Führungsnut 40 in der in Fahrtrichtung gesehenen hintersten Position zur Anlage kommen.

Nach der Ausrückbewegung I wird das Grundgestell 16 um die nun nach hinten verlagerte, gleitende erste und zweite Führungselement-Schwenkachse B1, B2 des Führungselementes 40 geschwenkt, wobei sich in der in Fahrtrichtung hintersten Position der ersten Führungsnut 34A, je nach Auslegung der Länge Δs2 der zweiten Führungsnut 40C, die Grundgestell-Schwenkachse A ausbildet. Die maximale Nichtgebrauchslage des Grundgestells 16 gegenüber der Sitzschiene 18 ergibt sich in den in Figur 6A, 6B dargestellten Positionen, so dass die Auslegung der Nichtgebrauchslage durch die jeweilige Länge und den Verstellweg Δs1, Δs2 der Führungsnuten 34A, 40C vorgebbar ist.

In dieser Nichtgebrauchslage [Wickellage] kann nun die Sicherungsstange 36 aus der ersten Aufnahmevorrichtung 42 aus ihrer Nichtfunktionsstellung entnommen werden und, wie in Figur 6B-3 gezeigt, in einer zweiten Aufnahmevorrichtung 44 angeordnet werden, so das die Rücksitzbank 10 gegen crashbedingte Einwirkungen und dergleichen gesichert ist. Die zweite Aufnahmevorrichtung 44 weist dabei genauso wie die erste Aufnahmevorrichtung 42 einen Rastbolzen 42A, 44A auf, der so ausgebildet ist, dass in beiden Positionen eine Rastklaue 36A der Sicherungsstange 36 in den jeweiligen Rastbolzen 42A, 44A eingreifen kann.

Figur 6B-3 zeigt die Funktionsstellung der Sicherungsstange 36 im Zusammenhang mit Figur 6B-1 und 6B-2 in Nichtgebrauchslage des Grundgestells 16, wobei die Sicherungsstange 36 zunächst um die zweite Sicherungsstangen-Schwenkachse C2 quer zur Schwenkbewegung II und anschließend in Richtung der Schwenkbewegung II um die erste Sicherungsstangen-Schwenkachse C1 verlagert worden ist.

Figur 6B-3 zeigt zusätzlich, dass der Rastpilz 30 das Verriegelungselement über Schraubbolzen 20 über einen schuhartigen Klotz in der Sitzschiene 18 befestigt ist, wobei unterhalb der Sitzschiene 18 nochmals in dieser Darstellung sicht das Sitzschienen-Befestigungselement 20 angeordnet ist.

Um die Position der Rücksitzbank 10 in Nichtgebrauchslage veränderlich zu gestalten, ist es zudem vorstellbar die Führungsnuten 34A, 40C mit Rastvorrichtungen oder allgemein mit Feststellvorrichtungen oder dergleichen zu versehen, so dass unterschiedliche Nichtgebrauchslagen der Rücksitzbank 10 einstellbar sind. Daraus folgt letztlich, dass die Sicherungsstange 36 in geeigneter Art und Weise in ihrer Länger verstellbar gestaltet werden muss, um bei verschiedenen Positionen der Rücksitzbank mittels der Rastklaue 36A in den jeweiligen Rastbolzen 42A, 44A eingreifen zu können.

Die adapterartige Ausgestaltung der Verbindung zwischen Grundgestell 16 und Sitzschiene 18 durch das Führungselement 40 und die Sicherungsstange 36 ermöglicht eine führbare und begrenzbare Wickelung der Rücksitzbank 10, so dass eine leichte Bedienung der Rücksitzbank 10 zur Schaffung von zusätzlichem Laderaum geschaffen worden ist.

Insbesondere ist darauf hinzuweisen, dass die Abstützung der Rücksitzbank 10 gegenüber der Sitzschiene 18 durch eine Sicherungsstange 36 erfolgt, die nicht im Karosserieboden 28 angebunden wird, so dass die gesamte Rücksitzbank 10 inklusive der optional angeordneten Sicherungsstange 36 sehr einfach über die Sitzschienen-Befestigungselemente 20 in einer Karosserie 28 nachrüstbar ist.

### Bezugszeichenliste

| | |
|---|---|
| 10 | Fahrzeugsitz [Rücksitzbank] |
| 12 | Sitzteil |
| 14 | Rückenlehne |
| 16 | Grundgestell |
| 16A | Aufnahmeöffnung |
| 18 | Sitzschienen |
| 20 | Sitzschienen-Befestigungselement [Schraubbolzen] |
| 22 | Ausrück-/Schwenk-Bedienelement [Lasche] |
| 24 | Rückenlehnenklapp-Bedienelement [Lasche] |
| 26 | Lagerelement |
| 26A | Hülsenanbindung |
| 26B | erstes Grundgestell-Befestigungselement [Spezialschraube] |
| 28 | Karosserie |
| 30 | Verriegelungselement [Rastpilz] |
| 32 | Kugellager |
| 34 | Gleitlager |
| 34A | erste Führungsnut |
| 34B | Gleitlagerführungsbolzen |
| 36 | Sicherungsstange |
| 36A | Rastklaue |
| 36B | Gelenk der Wickelsicherung 36 |
| 36C | Gelenkbefestigungselement |
| 38 | Haltevorrichtung |
| 38A | Halteblech |
| 40 | Führungselement [Begrenzungsstange] |
| 40A | Hülse |
| 40B | Befestigungselemente [Bolzen] |
| 40C | zweiten Führungsnut |
| 42 | erste Aufnahmevorrichtung [Wickelsicherung in Nichtgebrauchslage/Transportlage] |
| 42A | erster Rastbolzen |
| 42B | Halteschelle |
| 42C | Halter |
| 44 | zweite Aufnahmevorrichtung [Wickelsicherung in Gebrauchslage] |
| 44A | zweiter Rastbolzen |
| 46 | Verzurrelemente |
| 48 | Aufnahme [Verriegelungselement 30] |
| A | Grundgestell-Schwenkachse |
| B1 | erste Führungselement-Schwenkachse |
| B2 | zweite Führungselement -Schwenkachse |
| C1 | erste Sicherungsstangen-Schwenkachse |
| C2 | zweite Sicherungsstangen-Schwenkachse |
| Δs1 | erster Verstellweg |
| Δs2 | zweiter Verstellweg |
| I | Ausrückbewegung |
| II | Schwenkbewegung |

## Patentansprüche

1. Fahrzeugsitz (10), insbesondere Rücksitz oder Rücksitzbank,
■ mit einem, ein Sitzteil (12) und eine gegenüber dem Sitzteil (12) klappbar angeordnete Rückenlehne (14) tragendes Grundgestell (16),
■ das einerends auf mindestens einem, auf einer karosseriefesten Sitzschiene (18) verlagerbaren und relativ zur Sitzschiene (18) schwenkbaren Lagerelement (26) und anderenends auf einem sitzschienenfesten Verriegelungselement (30) aufsitzt,
■ wobei das schwenkbare Lagerelement (26) unter vorheriger optionaler Klappung der Rückenlehne (14) auf das Sitzteil (12) eine Schwenkbewegung (II) des Fahrzeugsitzes (10) von einer Gebrauchslage in eine Nichtgebrauchslage erlaubt,
**dadurch gekennzeichnet, dass**
■ das schwenkbare Lagerelement (26) entlang der Sitzschiene (18) beweglich angeordnet ist und eine Ausrückbewegung (I) des Grundgestells (16) gegenüber der Sitzschiene (18) eine Freigabe des Verriegelungselementes (30) bewirkt, wodurch die Schwenkbewegung (II) des Grundgestells (16) über das schwenkbare Lagerelement (26) in die Nichtgebrauchslage des Fahrzeugsitzes (10) ausführbar ist,
■ wobei das schwenkbare Lagerelement (26) mit einem sich auf der mindestens einen Sitzschiene (18) abstützenden Führungselement (40) drehbeweglich verbunden ist, welches den Fahrzeugsitz (10) führt und die Position der Nichtgebrauchslage bestimmt.

2. Fahrzeugsitz nach Anspruch 1, **dadurch gekennzeichnet, dass** die Nichtgebrauchslage die durch eine am Grundgestell (16) drehbeweglich angeordnete in Gebrauchslage am Fahrzeugsitz (10) fixierte und in Nichtgebrauchslage an einem freien Ende lösbare und an der mindestens einen Sitzschiene (18) befestigbare Sicherungsstange (36) crashsicher festlegbar ist.

3. Fahrzeugsitz nach Anspruch 1 oder 2, **dadurch gekennzeichnet, dass** das relativ zur Sitzschiene (18) schwenkbare Lagerelement (26) über ein in der mindestens einen Sitzschiene (18) angeordnetes Kugellager (32) oder Gleitlager (34) beweglich angeordnet ist, um die Ausrückbewegung (I) des Grundgestells (16) gegenüber der Sitzschiene (18) zu ermöglichen.

4. Fahrzeugsitz nach einem der Ansprüche 1 bis 3, **dadurch gekennzeichnet, dass** die Ausrückbewegung (I) und dessen erster Verstellweg (Δs1) durch einen in Richtung der Ausrückbewegung am Ende des Kugellagers (32) angeordneten Anschlag oder durch die Länge einer ersten Führungsnut (34A) des Gleitlagers (34), die jeweils in der Sitzschiene (18) angeordnet sind bestimmt wird.

5. Fahrzeugsitz nach einem der Ansprüche 1 bis 4, **dadurch gekennzeichnet, dass** das Verriegelungselement (30), insbesondere ein Rastpilz, vor der Ausrückbewegung (I) des Grundgestells (16) in einer das Verriegelungselement (30) umgreifenden Aufnahmeöffnung (16A) des Grundgestells (16) festsitzt, die sich in Richtung der Ausrückbewegung (I) öffnet, das Verriegelungselement (30) freigibt und somit das Grundgestell (16) über das scharnierartige Lagerelement (26) um eine Grundgestell-Schwenkachse (A) schwenkbar ist.

6. Fahrzeugsitz nach einem der Ansprüche 1 bis 5, **dadurch gekennzeichnet, dass** die Ausrückbewegung (I) durch mindestens ein Ausrück-/Schwenk-Bedienelement (22) und ein Rückenlehneklapp-Bedienelement (24), insbesondere flexible Laschen, ausführbar ist, das am Grundgestell (16) befestigt ist und nach der Ausrückbewegung (I) eine Schwenkbewegung (II) unter vorheriger optionaler Klappung der Rückenlehne (14) ermöglicht.

7. Fahrzeugsitz nach einem der Ansprüche 1 bis 6, **dadurch gekennzeichnet, dass** das Führungselement (40) jeweils endseitig Hülsen (40A) aufweist, wobei das Führungselement (40) über die Hülsen (40A) durchgreifende Befestigungselemente (40B) unmittelbar oder mittelbar einerseits mit dem schwenkbaren Lagerelement (26) und andererseits mit einer zweiten Führungsnut (40C) der Sitzschiene (18) drehbeweglich verbindbar ist.

8. Fahrzeugsitz nach Anspruch 7, **dadurch gekennzeichnet, dass** die Länge der zweiten Führungsnut (40C) einen zweiten maximalen Verstellweg (Δs2) des Grundgestells (16) von Gebrauchslage in die Nichtgebrauchslage bestimmt, da das Führungselement (40) einendseitig in der Führungsnut (40C) drehbeweglich angeordnet ist, wodurch die Position der Nichtgebrauchslage bestimmt ist.

9. Fahrzeugsitz nach Anspruch 2, **dadurch gekennzeichnet, dass** die Sicherungsstange (36) zur Lagefixierung des über die Schwenkbewegung (II) um eine Schwenkachse (A) des Grundgestells (16) auf mindestens einer Sitzschiene (18) aufsitzenden Fahrzeugsitzes (10) in seiner Nichtgebrauchslage, über mindestens eine Anbindung an dem sich in der Gebrauchslage befindlichen Grundgestell (16) in einer Nichtfunktionsstellung vorgehalten ist, wobei die Sicherungsstange (36) an dem Grundgestell (16) des Fahrzeugsitzes (10) drehbeweglich angeordnet ist und in der Gebrauchslage des Fahrzeugsitzes (10) an dem Grundgestell (16) an einem freien Ende lösbar fixiert ist und erst in der Nichtgebrauchslage des Fahrzeugsitzes (10) gelöst und an der Sitzschiene (18) wieder in einer Funktionsstellung fixiert wird, um den geschwenkten Fahrzeugsitz in seiner Nichtgebrauchslage gegen einen Crash zu sichern.

10. Fahrzeugsitz nach Anspruch 9, **dadurch gekennzeichnet, dass** die Sicherungsstange (36) am Grundgestell (16) unmittelbar oder über ein Halteblech (38) mittelbar vorzugsweise über Schraubverbindungen befestigt ist und ein Gelenk (36B) aufweist, welches über eine erste Sicherungsstangen-Schwenkachse (C1) eine Drehbewegung in die Schwenkbewegung (II) und über eine zweite Sicherungsstangen-Schwenkachse (C2) eine Drehbewegung im Wesentlichen quer zur Schwenkbewegung (II) ermöglicht.

11. Fahrzeugsitz nach Anspruch 10, **dadurch gekennzeichnet, dass** die Drehbewegung des Gelenkes (36B) der Sicherungsstange (36) im Wesentlichen quer zur Schwenkbewegung (II) eine lösbare Fixierung am Grundgestell (18) quer zur Schwenkbewegung (II) an einer ersten Aufnahmevorrichtung (42) erlaubt.

12. Fahrzeugsitz nach Anspruch 10, **dadurch gekennzeichnet, dass** die Drehbewegung des Gelenkes (36B) der Sicherungsstange (36) im Wesentlichen quer zur Schwenkbewegung (II) und nachfolgend in Schwenkbewegung (II) nach gelöster Fixierung aus der ersten Aufnahmevorrichtung (42) am Grundgestell (16) eine crashsichere Fixierung der Sicherungsstange (36) in einer sitzschienenseitigen zweiten Aufnahmevorrichtung (44) erlaubt.

13. Fahrzeugsitz nach Anspruch 11 und 12, **dadurch gekennzeichnet, dass** beide Aufnahmevorrichtungen (42, 44) mindestens einen Rastbolzen (42A, 44A) aufweisen, in den eine endseitig angeordnete Rastklaue (36A) der Sicherungsstange (36) eingreift.

## Claims

1. Vehicle seat (10), in particular rear seat or rear seat bench,
• with a base frame (16) which supports a seat part (12) and a back rest (14) arranged foldably in relation to the seat part (12)
• and which sits at one end on at least one bearing element (26) which is shiftable on a seat rail (18) mounted on the body and is pivotable relative to the seat rail (18), and at the other end sits on a locking element (30) mounted on the seat rail,
• wherein, with previous optional folding of the back rest (14) onto the seat part (12), the pivotable bearing element (26) permits a pivoting movement (II) of the vehicle seat (10) from a use position into a non-use position,
**characterized in that**
• the pivotable bearing element (26) is arranged movably along the seat rail (18) and a disengaging movement (I) of the base frame (16) in relation to the seat rail (18) releases the locking element (30), as a result of which the pivoting movement (II) of the base frame (16) via the pivotable bearing element (26) into the non-use position of the vehicle seat (10) can be implemented,
• wherein the pivotable bearing element (26) is rotatably connected to a guide element (40) which is supported on the at least one seat rail (18), guides the vehicle seat (10) and determines the non-use position.

2. Vehicle seat according to Claim 1, **characterized in that** the non-use position can be fixed in a crash-secure manner by a securing rod (36) which is rotatably arranged on the base frame (16), is fixed on the vehicle seat (10) in the use position and is releasable at a free end in the non-use position and is fastenable to the at least one seat rail (18).

3. Vehicle seat according to Claim 1 or 2, **characterized in that** the bearing element (26) which is pivotable relative to the seat rail (18) is movably arranged via a ball bearing (32) or plain bearing (34) arranged in the at least one seat rail (18) in order to permit the disengaging movement (I) of the base frame (16) in relation to the seat rail (18).

4. Vehicle seat according to one of Claims 1 to 3, **characterized in that** the disengaging movement (I) and the first displacement distance (Δs1) thereof is determined by a stop arranged at the end of the ball bearing (32) in the direction of the disengaging movement or by the length of a first guide groove (34A) of the plane bearing (34), said stop and guide groove both being arranged in the seat rail (18).

5. Vehicle seat according to one of Claims 1 to 4, **characterized in that** the locking element (30), in particular a mushroom-shaped latching element, before the disengaging movement (I) of the base frame (16) is firmly fixed in a receiving opening (16A) of the base frame (16), the receiving opening engaging around the locking element (30), opening in the direction of the disengaging movement (I) and releasing the locking element (30), and therefore the base frame (16) is pivotable about a base frame pivot axis (A) via the hinge-like bearing element (26).

6. Vehicle seat according to one of Claims 1 to 5, **characterized in that** the disengaging movement (I) can be implemented by at least one disengaging/pivoting control element (22) and a back rest-folding control element (24), in particular flexible pull straps, said back rest-folding control element (24) being fastened to the base frame (16) and, after the disengaging movement (I), with previous optional folding of the back rest (14), permitting a pivoting movement (II).

7. Vehicle seat according to one of Claims 1 to 6, **characterized in that** the guide element (40) has sleeves (40A) at both ends, wherein the guide element (40) is rotatably connectable via fastening elements (40B) reaching through the sleeves (40A) directly or indirectly to the pivotable bearing element (26) at one end and to a second guide groove (40C) of the seat rail (18) at the other end.

8. Vehicle seat according to Claim 7, **characterized in that** the length of the second guide groove (40C) determines a second maximum displacement distance (Δs2) of the base frame (16) from the use position into the non-use position, since the guide element (40) is rotatably arranged on one end side in the guide groove (40C), thus determining the non-use position.

9. Vehicle seat according to Claim 2, **characterized in that** the securing rod (36) for positionally fixing the vehicle seat (10) in the non-use position thereof, the vehicle seat sitting on at least one seat rail (18) via the pivoting movement (II) about a pivot axis (A) of the base frame (16), is kept in a non-functional position via at least one connection to the base frame (16) which is in the use position, wherein the securing rod (36) is rotatably arranged on the base frame (16) of the vehicle seat (10) and, in the use position of the vehicle seat (10), is releasably fixed at a free end to the base frame (16) and is released only in the non-use position of the vehicle seat (10) and, in a functional position, is fixed again to the seat rail (18) in order to secure the pivoted vehicle seat in the non-use position thereof against a crash.

10. Vehicle seat according to Claim 9, **characterized in that** the securing rod (36) is fastened to the base frame (16) directly, or indirectly via a holding plate (38), preferably via screw connections and has a joint (36B) which, via a first securing-rod pivot axis (C1), permits a rotational movement into the pivoting movement (II) and via a second securing-rod pivot axis (C2) permits a rotational movement substantially transversely with respect to the pivoting movement (II).

11. Vehicle seat according to Claim 10, **characterized in that** the rotational movement of the joint (36B) of the securing rod (36) substantially transversely with respect to the pivoting movement (II) permits a releasable fixing to the base frame (18) transversely with respect to the pivoting movement (II) at a first receiving device (42).

12. Vehicle seat according to Claim 10, **characterized in that** the rotational movement of the joint (36B) of the securing rod (36) substantially transversely with respect to the pivoting movement (II) and subsequently in the pivoting movement (II) after release from the first receiving device (42) on the base frame (16) permits a crash-secure fixing of the securing rod (36) in a second receiving device (44) on the seat rail.

13. Vehicle seat according to Claims 11 and 12, **characterized in that** the two receiving devices (42, 44) have at least one latching bolt (42A, 44A) in which a latching claw (36A) arranged on the end side of the securing rod (36) engages.

## Revendications

1. Siège de véhicule (10), en particulier siège arrière ou banquette arrière,
- comprenant un châssis de base (16) portant une partie de siège (12) et un dossier (14) disposé de manière rabattable par rapport à la partie de siège (12),
- lequel châssis de base repose, à une extrémité, sur au moins un élément de palier (26) pouvant être déplacé sur un rail de siège (18) fixé à la carrosserie et pouvant pivoter par rapport au rail de siège (18), et à l'autre extrémité, sur un élément de verrouillage (30) fixé au rail de siège,
- l'élément de palier pivotant (26) permettant, en rabattant préalablement optionnellement le dossier (14) sur la partie de siège (12), un mouvement de pivotement (II) du siège du véhicule (10) depuis une position d'utilisation dans une position de non utilisation,
**caractérisé en ce que**
- l'élément de palier pivotant (26) est disposé de manière mobile le long du rail de siège (18) et un mouvement de débrayage (I) du châssis de base (16) par rapport au rail de siège (18) provoque une libération de l'élément de verrouillage (30), de sorte que le mouvement de pivotement (II) du châssis de base (16) par le biais de l'élément de palier (26) dans la position de non utilisation du siège de véhicule (10) puisse être effectué,
- l'élément de palier pivotant (26) étant connecté de manière mobile en rotation à un élément de guidage (40) s'appuyant sur l'au moins un rail de siège (18), lequel élément de guidage guide le siège de véhicule (10) et définit la position de non utilisation.

2. Siège de véhicule selon la revendication 1, **caractérisé en ce que** la position de non utilisation peut être fixée de manière protégée contre les collisions par une tige de fixation (36) disposée de manière rotative sur le châssis de base (16), fixée dans la position d'utilisation, sur le siège de véhicule (10), détachable dans la position de non utilisation au niveau d'une extrémité libre et pouvant être fixée à l'au moins un rail de siège (18).

3. Siège de véhicule selon la revendication 1 ou 2, **caractérisé en ce que** l'élément de palier (26) pouvant pivoter par rapport au rail de siège (18) est disposé de manière mobile par le biais d'un roulement à billes (32) ou d'un palier lisse (34) disposé dans l'au moins un rail de siège (18), afin de permettre le mouvement de débrayage (I) du châssis de base (16) par rapport au rail de siège (18).

4. Siège de véhicule selon l'une quelconque des revendications 1 à 3, **caractérisé en ce que** le mouvement de débrayage (I) et sa première course de réglage (Δs1) sont définis par une butée disposée dans la direction du mouvement de débrayage à l'extrémité du roulement à bille (32) ou par la longueur d'une première rainure de guidage (34A) du palier lisse (34), qui sont à chaque fois disposées dans le rail de siège (18).

5. Siège de véhicule selon l'une quelconque des revendications 1 à 4, **caractérisé en ce que** l'élément de verrouillage (30), en particulier un champignon d'encliquetage, avant le mouvement de débrayage (I) du châssis de base (16), repose fixement dans une ouverture de réception (16A) du châssis de base (16) venant en prise dans l'élément de verrouillage (30), laquelle ouverture de réception s'ouvre dans la direction du mouvement de débrayage (I), libère l'élément de verrouillage (30) et de ce fait le châssis de base (16) peut pivoter par le biais de l'élément de palier (26) de type charnière, autour d'un axe de pivotement (A) du châssis de base.

6. Siège de véhicule selon l'une quelconque des revendications 1 à 5, **caractérisé en ce que** le mouvement de débrayage (I) peut être exécuté par au moins un élément de commande de débrayage/pivotement (22) et un élément de commande de rabattement du dossier (24), en particulier des pattes flexibles, lequel élément est fixé sur le châssis de base (16) et permet, après le mouvement de débrayage (I), un mouvement de pivotement (II) avec rabattement optionnel du dossier (14).

7. Siège de véhicule selon l'une quelconque des revendications 1 à 6, **caractérisé en ce que** l'élément de guidage (40) présente à chaque fois des douilles d'extrémité (40A), l'élément de guidage (40) pouvant être connecté de manière mobile en rotation par le biais d'éléments de fixation (40B) venant en prise à travers les douilles (40A) directement ou indirectement d'une part à l'élément de palier pivotant (26) et d'autre part à une deuxième rainure de guidage (40C) du rail de siège (18).

8. Siège de véhicule selon la revendication 7, **caractérisé en ce que** la longueur de la deuxième rainure de guidage (40C) définit une deuxième course de réglage maximale (Δs2) du châssis de base (16) depuis la position d'utilisation dans la position de non utilisation, car l'élément de guidage (40) est disposé du côté d'une extrémité de manière mobile en rotation dans la rainure de guidage (40C), de sorte que la position de non utilisation soit définie.

9. Siège de véhicule selon la revendication 2, **caractérisé en ce que** la tige de fixation (36), pour la fixation en position du siège de véhicule (10) reposant, par le biais du mouvement de pivotement (II) autour d'un axe de pivotement (A) du châssis de base (16), sur au moins un rail de siège (18) dans sa position de non utilisation, est maintenue dans une position non fonctionnelle par le biais d'au moins une liaison au châssis de base (16) se trouvant dans la position d'utilisation, la tige de fixation (36) étant disposée de manière mobile en rotation sur le châssis de base (16) du siège de véhicule (10) et étant fixée de manière amovible à une extrémité libre dans la position d'utilisation du siège de véhicule (10) sur le châssis de base (16) et étant libérée seulement dans la position de non utilisation du siège de véhicule (10) et étant à nouveau fixée sur le rail de siège (18) dans une position fonctionnelle, afin de protéger le siège de véhicule, pivoté dans sa position de non utilisation, contre une collision.

10. Siège de véhicule selon la revendication 9, **caractérisé en ce que** la tige de fixation (36) est fixée sur le châssis de base (16) directement ou indirectement par le biais d'une tôle de retenue (38), de préférence par le biais de connexions vissées, et présente une articulation (36B) qui permet, par le biais d'un premier axe de pivotement de la tige de fixation (C1), un mouvement de rotation dans le sens du mouvement de pivotement (II) et par le biais d'un deuxième axe de pivotement de la tige de fixation (C2), un mouvement de rotation essentiellement transversalement au mouvement de pivotement (II).

11. Siège de véhicule selon la revendication 10, **caractérisé en ce que** le mouvement de rotation de l'articulation (36B) de la tige de fixation (36) essentiellement transversalement au mouvement de pivotement (II) permet une fixation amovible au châssis de base (16) transversalement au mouvement de pivotement (II) au niveau d'un premier dispositif de réception (42).

12. Siège de véhicule selon la revendication 10, **caractérisé en ce que** le mouvement de rotation de l'articulation (36B) de la tige de fixation (36) essentiellement transversalement au mouvement de pivotement (II) et ensuite dans le sens du mouvement de pivotement (II) après la libération de la fixation depuis le premier dispositif de réception (42) au niveau du châssis de base (16) permet une fixation protégée contre les collisions de la tige de fixation (36) dans un deuxième dispositif de réception (44) du côté du rail de siège.

13. Siège de véhicule selon les revendications 11 et 12, **caractérisé en ce que** les deux dispositifs de réception (42, 44) présentent au moins un boulon d'encliquetage (42A, 44A) dans lequel s'engage une griffe d'encliquetage (36A) de la tige de fixation (36) disposée du côté de l'extrémité.
